# EUROPÄISCHE PATENTSCHRIFT

(11) **EP 2 532 582 B1**
(45) Veröffentlichungstag und Bekanntmachung des Hinweises auf die Patenterteilung: **17.08.2016**
(21) Anmeldenummer: 12170867.1
(22) Anmeldetag: 05.06.2012
(51) Int. Cl.: B64C 1/20, B64D 9/00

(54) **Frachtdeck, Frachtladesystem und Verfahren zum Be-/Entladen eines Frachtraums**
Freight deck, freight loading system and method for loading/unloading a freight area
Soute, système de chargement de cargaison et procédé de chargement/déchargement d'une soute

(30) Priorität: 10.06.2011 DE 102011051007
(43) Veröffentlichungstag der Anmeldung: 12.12.2012
(73) Patentinhaber: Telair International GmbH, 83714 Miesbach (DE)
(72) Erfinder: Holzner, Richard, 83071 Stephanskirchen (DE); Huber, Thomas, 83727 Schliersee (DE)
(74) Vertreter: Bohnenberger, Johannes

(56) Entgegenhaltungen:
- DE-C1- 10 158 298
- US-A1- 2010 100 225

## Beschreibung

Die Erfindung betrifft ein Frachtdeck, Frachtladesystem und Verfahren zum Be-/Entladen eines Frachtraums.

Moderne Flugzeuge weisen außerordentlich große Frachträume mit entsprechend groß dimensioniertem Frachtdeck auf, die mit Frachtstücken, insbesondere Frachtcontainern und Frachtpaletten, beladen werden. Üblicherweise werden standardisierte Frachtcontainer oder Frachtpaletten verwendet. Es kommt jedoch nicht selten vor, dass die Ladung über diese Frachtcontainer oder Frachtpaletten übersteht.

Es ist eine allgemeine Anforderung, dass die Entladevorgänge möglichst schnell vor sich gehen. Längere Be- und Entladezeiten bedeuten für den Betreiber erhöhte Kosten.

Es ist bekannt, für die effiziente Be- und Entladung des Frachtraums bzw. Frachtdecks Frachtladesysteme einzusetzen. Diese umfassen üblicherweise einen Steuercomputer sowie eine Vielzahl von Aktuatoren und Sensoren, die innerhalb des Frachtraums, insbesondere auf dem Frachtdeck, angeordnet sind. So wird das Frachtdeck beispielsweise mit einer Vielzahl von Frachtfördereinrichtungen versehen, die es ermöglichen, die Frachtstücke auf dem Frachtdeck effizient zu transportieren. Des Weiteren sind Funktionselemente, z.B. Rollenelemente, Führungs- und Verankerungselemente, vorgesehen. Die Frachtfördereinrichtungen können Sensoren umfassen, die es ermöglichen, die Anwesenheit eines Frachtstücks zu erkennen. Der Steuercomputer empfängt von den Sensoren Sensorsignale und wirkt auf die Frachtfördereinrichtungen derart ein, dass die Frachtstücke an einer vorgegebenen Position auf dem Frachtdeck abgestellt oder schnellstmöglich entladen werden. Ein entsprechendes Frachtladesystem ist aus der EP 1 346 911 A1 bekannt. Beim Be- und Entladen von Frachtstücken ist es teilweise erforderlich, dass diese in einem Be-/Entladebereich nahe bei den Türen des Flugzeugs gedreht werden. Häufig wird dieser Be- und Entladebereich auch zum Ausrichten der Frachtstücke verwendet. Daher wird dieser Bereich mit einer höheren Dichte von Frachtfördereinrichtungen ausgestattet.

DE 101 58 298 wird als nächstliegender Stand der Technik betrachtet und offenbart den Oberbegriff des Anspruchs 1.

Ausgehend von diesem Stand der Technik ist es Aufgabe der vorliegenden Erfindung, ein Frachtdeck, ein Frachtladesystem und ein Verfahren zum Be-/Entladen eines Frachtraums bereitzustellen, die einen besseren Be- und Entladevorgang sicherstellen. Insbesondere soll die Zeit, die zum Be- und Entladen von Frachtstücken notwendig ist, reduziert werden. Vorzugsweise erfolgt der Be- und Entladevorgang vollautomatisch oder wenigstens teilautomatisch.

Diese Aufgabe wird erfindungsgemäß durch das Frachtdeck gemäß dem vorliegenden Anspruch 1 und durch ein Verfahren gemäß dem voliegenden Anspruch 8 gelöst.

Insbesondere wird die Aufgabe durch ein Frachtdeck gelöst, das umfasst:
- eine erste Gruppe von Frachtfördereinrichtungen zum Fördern von Frachtstücken mit einer ersten Fördergeschwindigkeit und
- eine zweite Gruppe von Frachtfördereinrichtungen zum Fördern von Frachtstücken mit einer zweiten Fördergeschwindigkeit.

Das Frachtdeck zeichnet sich dadurch aus, dass sich die zweite Fördergeschwindigkeit deutlich, insbesondere um einen Betrag von mindestens 10%, insbesondere von mindestens 20%, insbesondere von mindestens 50% der ersten Fördergeschwindigkeit von der ersten Fördergeschwindigkeit unterscheidet.

Ein wesentlicher Gedanke der vorliegenden Erfindung besteht also darin, Frachtfördereinrichtungen an unterschiedlichen Stellen mit unterschiedlichen Geschwindigkeiten zu betreiben. Hierdurch kann es bewerkstelligt werden, dass die Frachtstücke beim Be- und Entladevorgang in unterschiedlichen Bereichen mit unterschiedlichen Geschwindigkeiten bewegt werden. So kann das erfindungsgemäße Frachtdeck beispielsweise derart ausgestaltet werden, dass in unkritischen Bereichen die Frachtstücke mit einer höheren Geschwindigkeit und in kritischen Bereichen (z.B. im Be- und Entladebereich des Frachtdecks) mit niedrigeren Geschwindigkeiten gefördert werden. Da die modernen Flugzeuge sehr lang sind, lässt sich durch die Erfindung die Ladezeit massiv verkürzen.

Die Frachtfördereinrichtungen umfassen ungeregelte Motoren, die vorzugsweise dazu ausgelegt sind, mit einer konstanten Drehzanl zu laufen.

Theoretisch wäre es möglich, die Drehzahl der Frachtfördereinrichtungen und somit die Fördergeschwindigkeiten individuell je nach Anforderung zu regeln. Dies erfordert jedoch einen massiven Steueraufwand. Des Weiteren führen geschwindigkeitsgeregelte Motoren zu erheblichen elektromagnetischen Verträglichkeitsproblemen. Insofern sind ungeregelte Motoren zu bevorzugen. Des Weiteren führt der Einsatz von ungeregelten Motoren dazu, dass die störungsfreie Laufzeit der Motoren deutlich erhöht wird. Störungen in der Elektronik oder der Mechanik treten deutlich seltener auf. Des Weiteren sind derartige Frachtfördereinrichtungen dazu geeignet, in der mitunter sehr rauen Umgebung auf einem Frachtdeck eingesetzt zu werden.

Die Frachtfördereinrichtungen der ersten Gruppe können jeweils ein Getriebe mit einem Übersetzungsverhältnis umfassen, das größer ist als das Getriebe der Frachtfördereinrichtungen aus der zweiten Gruppe. Es ist also möglich, die unterschiedlichen Fördergeschwindigkeiten durch den Einsatz von sich unterscheidenden Getrieben mit unterschiedlichen Übersetzungsverhältnissen zu bewerkstelligen. Vorzugsweise können die Frachtfördereinrichtungen im Wesentlichen baugleich sein, wobei sich lediglich die Getriebe in Abhängigkeit von der Verwendung der jeweiligen Frachtfördereinrichtung innerhalb der ersten Gruppe oder innerhalb der zweiten Gruppe unterscheiden.

Die erste Gruppe von Frachtfördereinrichtungen sind in einem Be- und/oder Entladebereich des Frachtdecks angeordnet und die zweite Gruppe in Förderbahnen des Frachtdecks.

Wie bereits erläutert, werden im Be-/Entladebereich des Frachtdecks die Frachtstücke ausgerichtet und/oder gedreht. Insofern ist es vorteilhaft, wenn die Frachtstücke in diesem Bereich mit einer langsameren Fördergeschwindigkeit gefördert werden. Sobald sich die Frachtstücke innerhalb der Förderbahnen befinden, können diese mit einer zweiten höheren Fördergeschwindigkeit transportiert werden. Vorzugsweise sind die Frachtfördereinrichtungen der zweiten Gruppe im Wesentlichen derart ausgerichtet, dass sie die Frachtstücke in eine Längsrichtung des Flugzeugs fördern. Die Frachtfördereinrichtungen der zweiten Gruppe können derart angeordnet und ausgebildet sein, dass sie die Frachtstücke in eine Querrichtung des Flugzeugs fördern. Vorzugsweise lassen sich die Frachtfördereinrichtungen der ersten Gruppe derart verschwenken, dass sie die Frachtstücke in unterschiedliche Richtungen antreiben können. In einem Ausführungsbeispiel sind die Frachtfördereinrichtungen der ersten Gruppe auf Drehtellern/Rotationstellern angeordnet, die ein Verschwenken dieser ermöglichen. Entsprechende Frachtfördereinrichtungen lassen sich beispielsweise der Patentanmeldung mit der Nr. DE 10 2011 000 743 entnehmen.

Die genannte Aufgabe wird des Weiteren durch ein Frachtladesystem mit einem Frachtdeck gelöst, wie dieses bereits beschrieben wurde.

Das Frachtladesystem kann mit dem Frachtfördereinrichtungen zur Aktivierung und Deaktivierung der Frachtfördereinrichtungen in kommunikativer Verbindung stehen, um ein erstes Frachtstück zu ver- und/oder entladen, wobei das Frachtladesystem eine Positionsermittlungseinrichtung zur Erfassung der Position mindestens eines zweiten Frachtstücks aufweist, wobei die Steuereinrichtung dazu ausgebildet ist, in Abhängigkeit von der bestimmten Position des mindestens einen zweiten Frachtstücks eine Auswahl von Frachtfördereinrichtungen aus der zweiten Gruppe zu aktivieren, um das erste Frachtstück neben dem zweiten Frachtstück zu positionieren.

Das Frachtladesystem kann also eine Positionsermittlungseinrichtung aufweisen, die es ermöglicht, die Positionen der bereits verladenen und noch zu verladenden Frachtstücke zu ermitteln. Insofern ist es möglich, einige der Frachtfördereinrichtungen aus der zweiten Gruppe gezielt auszuwählen, um ein zweites - noch zu verladendes Frachtstück gezielt zu positionieren. Diese Auswahl kann derart erfolgen, dass nur die Frachtfördereinrichtungen aktiviert werden, die einen ausreichenden Abstand zu den bereits positionierten Frachtstücken einhalten. Insofern wird eine Kollision der Frachtstücke mit einer möglicherweise hohen zweiten Frachtfördergeschwindigkeit vermieden. Unabhängig von der Position der anderen Frachtstücke kann die Steuereinrichtung bei der Auswahl der Fördereinrichtungen aus der zweiten Gruppe Begrenzungen des Frachtdecks, beispielsweise Riegel oder Seitenwände berücksichtigen.

In einem Ausführungsbeispiel weist das Frachtladesystem eine Abmessungserfassungseinrichtung zur zumindest teilweisen Erfassung der Abmessungen der Frachtstücke auf, wobei die Steuereinrichtung dazu ausgebildet ist, in Abhängigkeit von den erfassten Abmessungen die Auswahl von Frachtfördereinrichtungen vorzunehmen, insbesondere um Übermaße der Frachtstücke beim Positionieren des ersten Frachtstücks zu berücksichtigen. Es ist möglich, dass die Steuereinrichtung Annahmen bezüglich der Abmessungen der Frachtstücke trifft, um eine geeignete Auswahl der Frachtfördereinrichtungen aus der zweiten Gruppe zu treffen und Kollisionen zu vermeiden. Vorzugsweise gibt es jedoch eine Abmessungserfassungseinrichtung, die individuelle Angaben bezüglich der Abmessungen der einzelnen Container bereitstellt. Vorzugsweise können diese Angaben auch ein mögliches Übermaß berücksichtigen.

Die Abmessungserfassungseinrichtung kann ein Datenlesegerät zur Erfassung von den Frachtstücken zugeordneten Daten, insbesondere zur Erfassung von an den Frachtstücken angeordneten RFID-Tags umfassen. Vorzugsweise sind also die Frachtstücke mit einem Datenspeicher ausgestattet, der es ermöglicht, Informationen, die sich auf das jeweilige Frachtstück beziehen, auszulesen. Diese Informationen können Angaben über die Abmessungen und/oder Übermaße enthalten. Alternativ wäre es natürlich auch möglich, die Abmessungen eines Frachtstücks beim Einfahren in den Frachtladeraum zu vermessen.

Die eingangs genannte Aufgabe kann des Weiteren durch ein Verfahren zum Be- und/oder Entladen eines Frachtraums eines Flugzeugs gelöst werden, wobei das Verfahren die folgenden Schritte umfasst:
- Ausrichten mindestens eines ersten Frachtstücks mittels einer ersten Gruppe von Frachtfördereinrichtungen, die das Frachtstück mit einer ersten Fördergeschwindigkeit antreiben;
- Fördern des Frachtstücks entlang einer Längsrichtung des Flugzeugs mittels einer zweiten Gruppe von Frachtfördereinrichtungen, die das Frachtstück mit einer zweiten Fördergeschwindigkeit antreiben;

dadurch gekennzeichnet, dass sich die zweite Fördergeschwindigkeit deutlich, insbesondere um einen Betrag von mindestens 10%, insbesondere von mindestens 20%, insbesondere von mindestens 50% der ersten Fördergeschwindigkeit, von der ersten Fördergeschwindigkeit unterscheidet.

Auch für dieses Verfahren ergeben sich die Vorteile, die bereits in Verbindung mit den erfindungsgemäßen Verrichtungen erläutert wurden.

Das Verfahren kann des Weiteren die folgenden Schritte umfassen:
- Bestimmen einer Position eines zweiten Frachtstücks innerhalb des Frachtraums mittels einer Positionsermittlungseinrichtung;
- Auswahl und Aktivierung von Frachtfördereinrichtungen aus der zweiten Gruppe in Abhängigkeit von der Position des zweiten Frachtstücks, um das erste Frachtstück neben dem zweiten Frachtstück zu positionieren.

Des Weiteren kann ein Abbremsen des ersten Frachtstücks in Abhängigkeit von der Position des zweiten Frachtstücks und/oder einer Position des ersten Frachtstücks erfolgen. Dieses Abbremsen kann bereits dadurch bewerkstelligt werden, dass lediglich eine Auswahl der Frachtfördereinrichtungen aus der zweiten Gruppe aktiviert werden, so dass wenn das erste Frachtstück eine bestimmte Position erreicht, dieses von den ausgewählten Frachtfördereinrichtungen nicht mehr gefördert wird und somit zwangsläufig langsamer wird. Alternativ kann ein aktives Abbremsen des Frachtstücks erfolgen, wobei zumindest eine Teilmenge der zweiten Gruppe von Frachtfördereinrichtungen während des Förderns des ersten Frachtstücks gezielt deaktiviert werden, um das Frachtstück zu stoppen. Nach dem Aufstoppen des Frachtstücks können die Frachtfördereinrichtungen erneut aktiviert werden, um das zweite Frachtstück genau auf der vorgegebenen Position einzuparken. Beispielsweise kann so das zweite Frachtstück kurz vor dem ersten Frachtstück (vollständig) gestoppt werden und dann erneut beschleunigt werden, bis es mehr oder weniger unmittelbar neben dem ersten Frachtstück positioniert ist. Alternativ kann das erste Frachtstück vor dem Einfahren in hierfür vorgesehen Riegel gestoppt, dann erneut beschleunigt und somit eingeparkt werden. Das erfindungsgemäße Verfahren sowie die entsprechend ausgebildete Steuereinrichtung machen es sich hierbei zu Nutze, dass die Frachtstücke eine erhebliche Masse aufweisen und insofern mit einer gewissen Trägheit beschleunigt werden, so dass ein Anschlagen an einem weiteren Frachtstück oder an einem Riegel - noch in der Beschleunigungsphase - mit geringerer Geschwindigkeit und Kraft erfolgt.

Die Frachtfördereinrichtungen aus der zweiten Gruppe können dazu ausgebildet sein, die Frachtstücke mit der zweiten Fördergeschwindigkeit, die größer als 15 Meter pro Minute, insbesondere größer als 25 Meter pro Minute, ist, anzutreiben.

Vorzugsweise treiben die Frachtfördereinrichtungen aus der zweiten Gruppe also das Frachtstück mit einer deutlich höheren Geschwindigkeit als die aus der ersten Gruppe an.

Die erste Frachtfördergeschwindigkeit kann kleiner als die zweite Frachtfördergeschwindigkeit, insbesondere kleiner als 25 Meter pro Minute, insbesondere kleiner als 15 Meter pro Minute sein.

Weitere vorteilhafte Ausführungsformen ergeben sich anhand der Unteransprüche.

Nachfolgend wird die Erfindung mittels mehrerer Ausführungsbeispiele beschrieben, die anhand von Abbildungen näher erläutert werden.

Hierbei zeigen:
- Fig. 1: eine schematische Darstellung eines Frachtdecks mit einer Vielzahl von Frachtfördereinrichtungen;
- Fig. 2: eine Detailansicht des Frachtdecks aus Fig. 1;
- Fig. 3: eine Detailansicht einer Frachtfördereinrichtung aus den Fig. 1 und 2;
- Fig. 4: eine schematische Darstellung des Steuercomputers mit Sensoren und Aktuatoren;
- Fig. 5: ein Ablaufdiagramm einer von dem Steuercomputer implementierten Steuerstrategie; und
- Fig. 6: eine schematische Darstellung eines Frachtcontainers.

In der nachfolgenden Beschreibung werden für gleiche und gleich wirkende Teile dieselben Bezugsziffern verwendet.

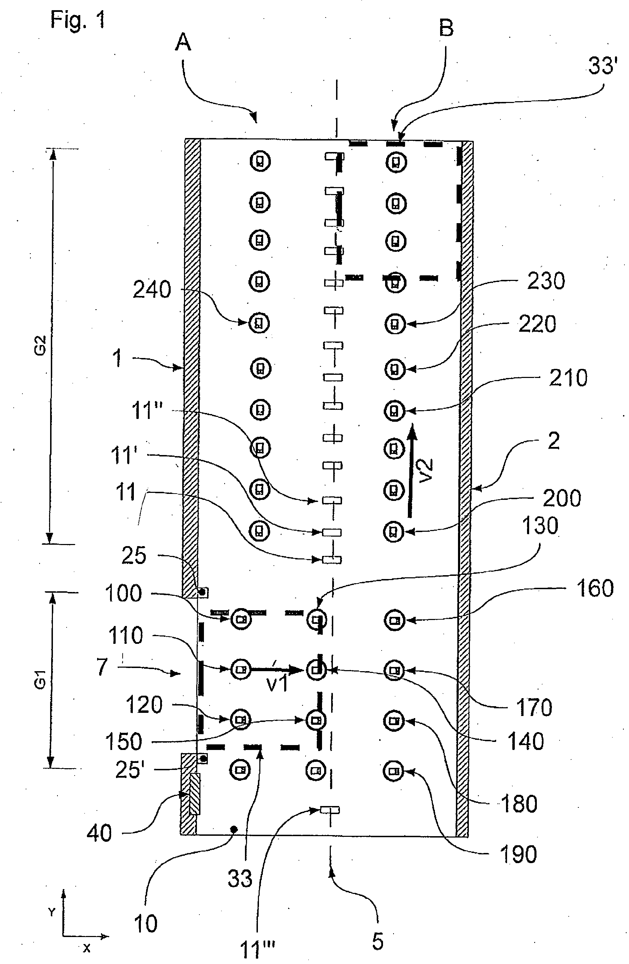

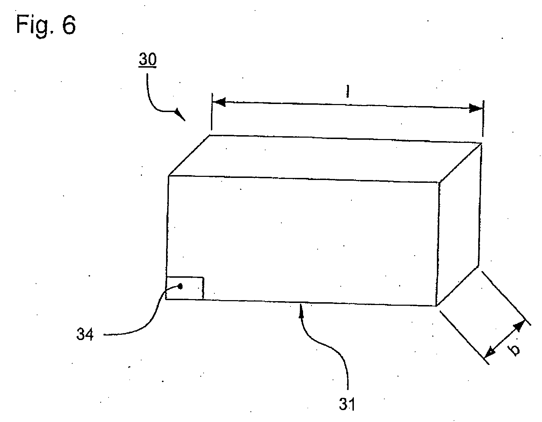

Fig. 1 zeigt eine schematische Darstellung eines Frachtdecks 10 eines Flugzeugs, wobei das Frachtdeck 10, das durch eine erste Seitenwand 1 und eine zweite Seitenwand 2 seitlich begrenzt ist. Die erste Seitenwand 1 hat eine Türöffnung 7, durch die Frachtstücke, insbesondere Frachtcontainer 30 (vgl. Fig. 6) in den Frachtraum des Flugzeugs eingefahren werden können. Das Frachtdeck 10 ist im Wesentlichen symmetrisch zu einer mittig entlang der Längsrichtung des Flugzeugs bzw. Y-Richtung verlaufenden Mittelebene 5 mit Funktionselementen ausgestattet. Auf dieser Mittelebene 5 sind entlang der Y-Richtung des Flugzeugs Mittelriegel 11, 11', 11", 11"' angeordnet, die eine erste Frachtladebahn A und eine zweite Frachtladebahn B definieren. Die erste Frachtladebahn A befindet sich auf der der Türöffnung 7 zugewandten Seite der Mittelebene 5. Das Frachtdeck 10 ist mit einer Vielzahl von Frachtfördereinrichtungen 100, 110, ..., 240 ausgestattet, die dazu geeignet sind, Frachtcontainer 30 auf dem Frachtdeck 10 zu fördern.

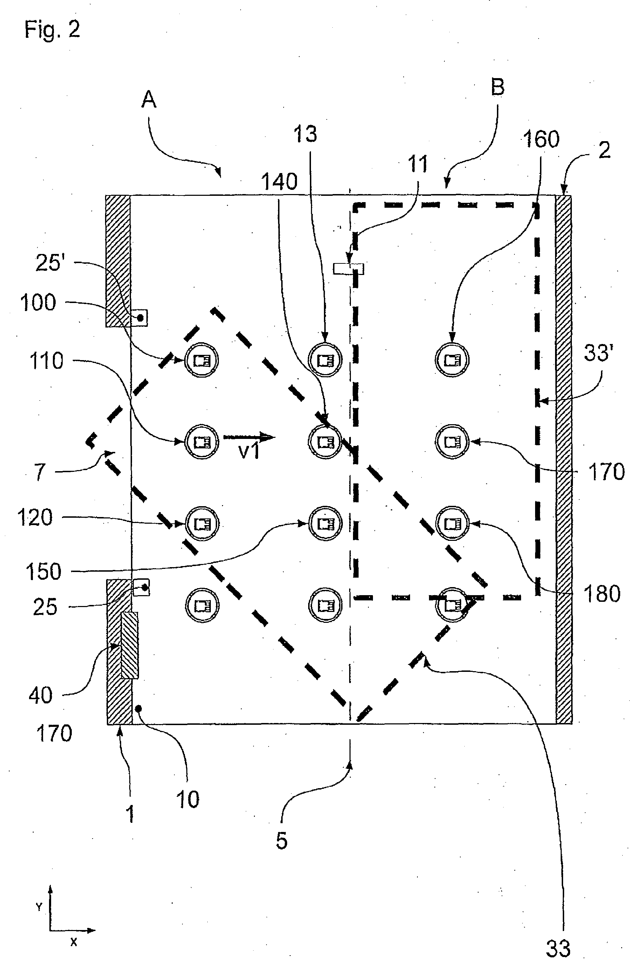

Die Fig. 6 zeigt einen quaderförmigen Frachtcontainer 30, der eine Frachtcontainerlänge I und eine Frachtcontainerbreite b hat. Ein Frachtcontainerboden 31 des Frachtcontainers 30 ist im Wesentlichen rechteckig ausgebildet. Es ergeben sich Frachtbodenumrisse 33, 33', wie diese beispielhaft in den Fig. 1 und 2 gezeigt sind. Der Frachtcontainer 30 hat ein RFID-Tag 34, das Daten, die sich auf den Frachtcontainer 30 beziehen, speichert. Beispielsweise können innerhalb des RFID-Tags 34 Informationen bezüglich der Abmessungen des Frachtcontainers 30, beispielsweise die Frachtcontainerlänge I und die Frachtcontainerbreite b gespeichert sein.

Erfindungsgemäß wird bei den Frachtfördereinrichtungen 100, 110, ..., 240 des Frachtdecks 10 zwischen einer ersten Gruppe G1 und einer zweiten Gruppe G2 unterschieden. Die erste Gruppe G1 von Frachtfördereinrichtungen 100, 110, ..., 190 befindet sich im Be- und Entladebereich des Frachtdecks 10 auf der Höhe der Türöffnung 7. Diese erste Gruppe G1 von Frachtfördereinrichtungen 100, 110, ..., 190 ist derart angeordnet und ausgebildet, dass die zugehörigen Frachtfördereinrichtungen 100, 110, ..., 190 den Frachtcontainer 30 geeignet ausrichten, gegebenenfalls drehen, können. Die Frachtfördereinrichtungen 200, 210, ..., 240 der zweiten Gruppe G2 befinden sich in einem Bereich außerhalb des Be-/Entladebereichs. Im gezeigten Ausführungsbeispiel sind sie wechselseitig zu den Mittelriegeln 11, 11', 11", 11"' in den Frachtladebahnen A, B angeordnet.

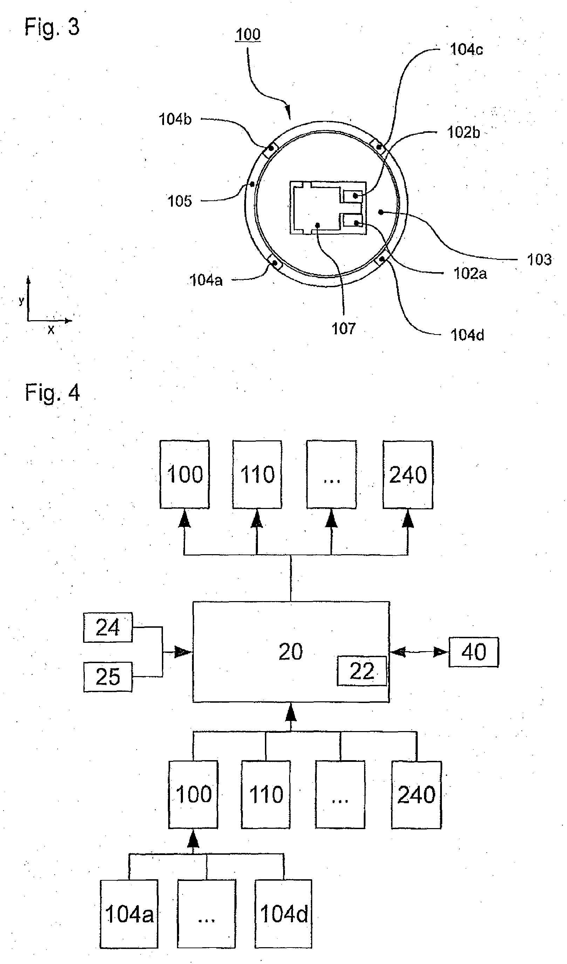

Die Frachtfördereinrichtungen 100, 110, ..., 240 stehen in kommunikativer Verbindung mit einem Steuercomputer 20 (Fig. 4), der diese aktivieren und deaktivieren kann. In dem Ausführungsbeispiel sind die Frachtfördereinrichtungen 100, 110, ..., 240 derart ausgebildet, dass sie in einem aktivierten Zustand ein Frachtstück (z.B. Frachtcontainer 30), das die Frachtfördereinrichtungen 100, 110, ..., 240 überdeckt, mit einer Frachtfördergeschwindigkeit v1 oder v2 antreiben. Betrachtet man beispielsweise Fig. 1 und geht davon aus, dass der Frächtcontainer 30 eine Position einnimmt, dass dieser den Frachtbodenumriss 33 der Fig. 1 hat, so würden die Frachtfördereinrichtungen 100, 110, 120, 130, 140, 150 in einem aktivierten Zustand den Frachtcontainer 30 antreiben.

Die Frachtfördereinrichtungen 100, 110 sind dazu ausgebildet, Frachtstücke mit einer konstanten Geschwindigkeit anzutreiben, wobei die erste Gruppe G1 von Frachtfördereinrichtungen 100, 110, ..., 190 die Frachtstücke mit der ersten Frachtfördergeschwindigkeit v1 antreiben, die deutlich geringer ist als die zweite Frachtfördergeschwindigkeit v2 der zweiten Gruppe G2. In dem beschriebenen Ausführungsbeispiel ist die erste Frachtfördergeschwindigkeit der ersten Gruppe G1 ungefähr gleich 14 Meter pro Minute und die zweite Frachtfördergeschwindigkeit v2 der zweiten Gruppe G2 ungefähr gleich 26 Meter pro Minute. Insofern ist es möglich, den Frachtcontainer 30 mit einer deutlich langsameren ersten Frachtfördergeschwindigkeit v1 in den Laderaum des Flugzeugs einzufahren und auszurichten. Sobald der Frachtcontainer 30 von der zweiten Gruppe G2 von Frachtfördereinrichtungen 200, 210, ..., 240 angetrieben wird, erhöht sich die Geschwindigkeit des Frachtcontainers 30, da die Frachtfördergeschwindigkeit v2 deutlich höher ist. Durch diese Ausgestaltung des Frachtdecks ist es möglich, die Ladezeit deutlich zu verringern, da in unkritischen Bereichen, z.B. beim Fördern der Frachtstücke in Längsrichtung innerhalb der Frachtförderbahnen A, B, deutlich höhere Geschwindigkeiten erzielt werden.

Diese unterschiedlichen Geschwindigkeiten sind notwendig, da eine schnelle Förderung im Be-/Entladebereich zu einem schnellen Verschleiß des Frachtdecks 10, des Flugzeugs allgemein sowie zu einer Beschädigung der Ladung und zur Verletzung des Personals führen kann. Fig. 2 zeigt schematisch, wie ein entsprechend größer dimensionierter Frachtcontainer 30 in Querrichtung (X-Richtung) durch die Türöffnung 7 eingefahren wird, innerhalb des Be- und Entladebereichs gedreht wird (vgl. Frachtbodenumriss 33) und letztendlich an der zweiten Frachtladebahn B ausgerichtet wird (vgl. Frachtbodenumriss 33'), um in dieser zweiten Frachtladebahn B in Längsrichtung gefördert zu werden.

Um das Drehen des Frachtcontainers 30 zu gewährleisten, verfügen die Frachtfördereinrichtungen 100, 110, 120, ..., 190 über einen Rotationsteller 103. Die Fig. 3 zeigt exemplarisch die genaue Ausgestaltung der Frachtfördereinrichtung 100. Die Frachtfördereinrichtung 100 hat einen ringförmigen Rahmen 105 und einen kreisförmigen, im Rahmen 105 angeordneten Rotationsteller 103. Der Rotationsteller 103 ist derart drehbeweglich innerhalb des Rahmens 105 gelagert, dass sich dieser in der X=Y-Ebene um eine Rotationsachse drehen lässt. Die Frachtfördereinrichtung 100 weist entsprechende Aktuatoren und Sensoren auf, so dass der Rotationsteller 103 innerhalb des Rahmens 105 beliebig ausgerichtet werden kann. Die Sensoren geben Aufschluss über die Ausrichtung des Rotationstellers 103 innerhalb des Rahmens 105. Der Rotationsteller 103 beherbergt eine Rollenantriebseinheit 107, die Antriebsrollen 102a, 102b antreibt. Die Antriebsrollen 102a, 102b sind dazu ausgebildet, Frachtstücke in eine Richtung quer zur Drehachse der Antriebsrollen 102a, 102b im Wesentlichen innerhalb der X-Y-Ebene anzutreiben. Die Fig. 3 zeigt die Frachtfördereinrichtung 100 in einer Ausrichtung, in der diese die Frachtstücke in Querrichtung des Flugzeugs (X-Richtung) antreiben kann. Es sollte für den hier tätigen Fachmann offensichtlich sein, dass sich die Frachtstücke durch ein Antreiben der Antriebsrollen 102a, 102b in eine entgegengesetzte Drehrichtung in die entgegengesetzte Richtung antreiben lassen.

Eine bevorzugte Ausführung der Frachtfördereinrichtung 100 umfasst des Weiteren vier Sensoreinrichtungen 104a, 104b, 104c, 104d, die an dem Rahmen 105 angeordnet sind. Insofern beeinflusst die Ausrichtung des Rotationstellers 103 die Position der Sensoreinrichtungen 104a, 104b, 104c, 104d nicht. Vorzugsweise sind die Sensoreinrichtungen 104a, 104b, 104c, 104d jeweils auf der gegenüberliegenden Seite des Rahmens 105 angeordnet. So befindet sich die erste Sensoreinrichtung 104a im 45°-Bereich der Frachtfördereinrichtung 100, die zweite Sensoreinrichtung 104b im 135°-Bereich, die dritte Sensoreinrichtung 104c im 225°-Bereich und die vierte Sensoreinrichtung 104d im 315°-Bereich. Die Sensoreinrichtungen 104a, 104b, 104c, 104d sind Lichtsensoren, die Licht emittierende Dioden und Fotodioden umfassen, so dass sich die Sensoreinrichtungen 104a, 104b, 104c, 104d dazu eignen, das Vorhandensein eines Frachtstücks unmittelbar oberhalb der Sensoreinrichtungen 104a, 104b, 104c, 104d zu detektieren. Des Weiteren sind diese Sensoreinrichtungen 104a, 104b, 104c, 104d dazu geeignet, eine teilweise oder völlige Überdeckung der Frachtfördereinrichtung 100 durch ein Frachtstück zu erkennen.

Theoretisch wäre es möglich, mittels der vier Sensoreinrichtungen 104a, 104b, 104c, 104d zu erkennen, ob der Frachtcontainer 30 in Querrichtung zur Frachtfördereinrichtung 100 ankommt. Insofern ist es möglich, eine Bewegungsrichtung des Frachtcontainers 30 zu erkennen und zu berücksichtigen.

In dem beschriebenen Ausführungsbeispiel weist zumindest jede Frachtfördereinrichtung 100, 110, ..., 190 der ersten Gruppe G1 und jede Frachtfördereinrichtung 200, 210, ..., 240 der zweiten Gruppe G2 entsprechende Sensoreinrichtungen 104a, 104b, 104c, 104d auf. Diese stehen in kommunikativer Verbindung mit dem Steuercomputer 20.

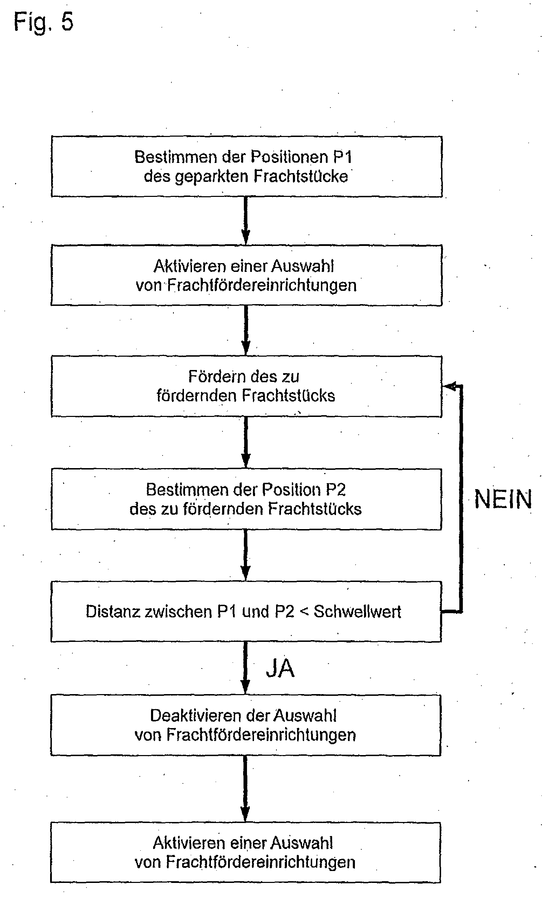

Aufgrund dieser Ausstattung des Frachtdecks 10 ist es dem Steuercomputer 20 möglich, den Frachtcontainer 30 vollautomatisch oder zumindest computergestützt an einer vorgegebenen (Park-)Position auf dem Frachtdeck 10 zu positionieren, ohne dass der Frachtcontainer 30 selbst oder andere Frachtcontainer 30, die bereits auf dem Frachtdeck 10 geparkt sind, Funktionselemente, die auf dem Frachtdeck angeordnet sind, beschädigt werden. Hierfür implementiert der Steuercomputer 20 eine Positionsermittlungseinrichtung 22 (Fig. 4). Diese bestimmt eine erste Positionen P1 der bereits geparkten Frachtstücke (vgl. Fig. 5). Danach aktiviert sie eine Auswahl von Frachtfördereinrichtungen 200, 210, ..., 240 der Gruppe G2, um das zu fördernde Frachtstück an der vorgegebenen Position zu positionieren. Die aktivierten Frachtfördereinrichtungen 200, 210, ..., 240 der zweiten Gruppe G2 fördern das Frachtstück. Während des Förderns ermittelt der Steuercomputer 20 fortwährend eine zweite Position P2 des zu fördernden Frachtstücks und deaktiviert die Auswahl von Frachtfördereinrichtungen 200, 210, 120, ..., 240 der Gruppe G2, sobald die Distanz zwischen der ersten Position P1 und der zweiten Position P2 unterhalb eines vorgegebenen Schwellwerts (z.B. 10 cm) liegt. Da das zu fördernde Frachtstück nicht mehr von den Frachtfördereinrichtungen 200, 210, ..., 240 angetrieben wird, stoppt dieses. Der Steuercomputer 20 erfasst z.B. per Sensoren, den Stillstand des zu fördernden Frachtstücks. Alternativ kann der Steuercomputer 20 einen vorgegebenen Zeitraum warten, um sicherzustellen, dass das zu fördernde Frachtstück vollständig zum Stillstand gekommen ist. Danach wird die Auswahl von Frachtfördereinrichtungen 200, 210, ..., 240 der zweiten Gruppe G2 erneut aktiviert, so dass das zu fördernde Frachtstück endgültig in die Park- oder Ziel-Position eingeparkt wird. Die letztgenannten Schritte der Deaktivierung und Aktivierung haben den Vorteil, dass das Frachtstück aufgrund seiner Masse nur langsam beschleunigt wird, so dass trotz der hohen zweiten Frachtfördergeschwindigkeit v2 das Frachtstück nur mit einer geringen Geschwindigkeit eingeparkt wird. Dies schont vorhandene Funktionselement sowie bereits geparkte Frachtstücke.

Beispielsweise kann bei einem Verladevorgang ein erster Frachtcontainer 30 an der zweiten Förderbahn/Frachtladebahn B ausgerichtet sein und sich ein zweiter Frachtcontainer 30 innerhalb der zweiten Frachtladebahn B an der durch den Frachtbodenumriss 33' vorgegebenen Position befinden. In diesem Fall kann der Steuercomputer 20 die Frachtfördereinrichtungen 200 bis 230 sowie die dazwischen liegenden Frachtfördereinrichtungen so lange aktivieren, bis sich der zweite Frachtcontainer 30 in einer Position befindet, in der er die Frachtfördereinrichtung 230 teilweise bedeckt. Diese Position kann durch die Sensoreinrichtungen 104a, 104b, 104c, 104d der Frachtfördereinrichtung 230 erkannt werden. In diesem Fall stoppt der Steuercomputer 20 den zweiten Frachtcontainer 30 durch ein Deaktivieren der Frachtfördereinrichtungen 100, 110, ..., 240, insbesondere der Frachtfördereinrichtungen 210, 220, 230. Danach werden diese Frachtfördereinrichtungen 210, 220, 230 erneut aktiviert, so dass diese zwar mit der zweiten Frachtfördergeschwindigkeit v2 laufen, der Frachtcontainer jedoch auf Grund der Trägheit eine deutlich geringere Geschwindigkeit hat. Insofern ist der Aufprall auf den bereits positionierten Frachtcontainer 30 deutlich geringer als dieser bei voller Geschwindigkeit wäre. Für das beschriebene Ausführungsbeispiel ist es nicht notwendig, dass der Steuercomputer die Abmessungen der Frachtcontainer 30 kennt. Allein anhand der Überdeckungsgrade der Frachtfördereinrichtungen 100, 110, ...,240 lässt sich ein geeigneter Steueralgorithmus implementieren. In einem weiteren Ausführungsbeispiel erfasst der Steuercomputer 20 jedoch beim Einfahren des Frachtcontainers 30 in den Frachtraum das RFID-Tag 34 am Frachtcontainer 30 und ermittelt dessen genaue Abmessungen. Die Positionsermittlungseinrichtung 22 kann dann derart ausgestaltet sein, dass sie anhand der Sensoreinrichtungen 104a, 104b, 104c, 104d, die über das gesamte Frachtdeck 10 verteilt sind, und anhand der Bewegungsmuster des Frachtcontainers 30 stets die genaue Position des Frachtcontainers 30 ermittelt. Hierbei kann auch die Geschwindigkeit, mit der sich ein Frachtcontainer 30 in eine bestimmte Richtung bewegt, berücksichtigt werden. Ebenso kann der Steuercomputer 20 die exakte Position von bereits auf dem Frachtdeck 10 geparkten Frachtcontainern ermitteln. Insofern ist es für den Steuercomputer 20 unproblematisch, genaue Distanzen zwischen den einzelnen Frachtcontainern 30 zu errechnen. Der Steuercomputer 20 kann in diesem Ausführungsbeispiel den zu parkenden Frachtcontainer 30 genau dann stoppen, wenn die Distanz zwischen dem zu parkenden Frachtcontainer 30 und einem weiteren Frachtcontainer kleiner einem vorgegebenen Schwellwert ist, oder wenn der zu parkende Frachtcontainer nahe an einen Endriegel herangefahren wurde. Nach dem Stoppen des zu parkenden Frachtcontainers 30 erfolgt eine erneute Beschleunigung, wie diese bereits beschrieben wurde, so dass der Frachtcontainer 30 seine endgültige Position einnimmt.

Theoretisch wäre es auch möglich, entsprechende Abmessungen des Frachtcontainers 30 manuell einzugeben. Hierfür könnte eine entsprechende Eingabeeinrichtung 24 vorgesehen werden. Des Weiteren umfasst das erfindungsgemäße Frachtladesystem vorzugsweise eine Anzeigeeinrichtung 40, die es dem Benutzer ermöglicht, den Ladevorgang genau zu verfolgen. Zur Erfassung des RFID-Tags 34 sind an der Türöffnung 7 wechselseitig RFID-Sensoreinrichtungen 25, 25' angeordnet.

In den vorab beschriebenen Ausführungsbeispielen verfügen sämtliche Frachtfördereinrichtungen 100, 110, ..., 240 über Rotationsteller 103. Für den hier tätigen Fachmann sollte es offensichtlich sein, dass die Frachtfördereinrichtungen 200, ..., 240 der zweiten Gruppe G2 keine Rotationsteller 103 benötigen, da sie den Frachtcontainer 30 lediglich in Längsrichtung des Flugzeugs, in Y-Richtung fördern. Insofern ist es denkbar, diese Frachtfördereinrichtungen 200, 210, ..., 240 derart auszuführen, dass diese keine Rotationsteller 103 aufweisen.

In den vorher genannten Ausführungsbeispielen greift der Steuercomputer 20 vorwiegend auf Sensorsignale zurück, die von den Sensoreinrichtungen 104a, 104b, 104c, 104d bereitgestellt werden. Es ist jedoch möglich, weitere Sensoren auf dem Frachtdeck anzuordnen. Beispielsweise können Annäherungssensoren an Riegeln vorgesehen werden, um ein Auffahren des Frachtcontainers 30 mit hoher Geschwindigkeit auf diese Riegel zu verhindern. Auch hier kann es zu einem Abstoppen und erneuten Beschleunigen der Frachtcontainer 30 kommen.

Die beschriebenen Frachtfördereinrichtungen 100, 110, ..., 240 sind dazu ausgebildet, lediglich dann die Antriebsrollen 102a, 102b anzutreiben, wenn sie aktiviert sind und sich ein Frachtstück (z.B. der Frachtcontainer 30) unmittelbar über diesen befindet. Einige oder alle Frachtfördereinrichtungen 100, 110, ..., 240 können aber auch dazu ausgebildet sein, unabhängig von dem Vorhandensein eines Frachtstücks im Aktivierungszustand die Antriebsrollen 102a, 102b anzutreiben.

### Bezugszeichenliste

- 1, 2: Seitenwände
- 5: Mittelebene
- 7: Türöffnung
- 10: Frachtdeck
- 11, 11', 11", 11"': Mittelriegel
- 20: Steuercomputer
- 22: Positionsermittlungseinrichtung
- 24: Eingabeeinrichtung
- 25, 25': RFID-Sensoreinrichtung
- 30: Frachtcontainer
- 31: Frachtboden
- 33, 33': Frachtbodenumrisse
- 34: RFID-Tag
- 40: Anzeigeeinrichtung
- 100, 110, ..., 190: Frachtfördereinrichtungen der ersten Gruppe
- 200, 210, ..., 240: Frachtfördereinrichtungen der zweiten Gruppe
- 102a, 102b: Antriebsrollen
- 103: Rotationsteller
- 104a, 104b, 104c, 104d: Sensoreinrichtungen
- 105: Rahmen
- 107: Rollenantriebseinheit
- X, Y: X- bzw. Y-Richtung
- A: Frachtladebahn A
- B: Frachtladebahn B
- G1: erste Gruppe
- G2: zweite Gruppe
- b: Frachtcontainerbreite
- I: Frachtcontainerlänge
- v1, v2: Frachtfördergeschwindigkeit

## Patentansprüche

1. Frachtdeck, umfassend:
- eine erste Gruppe (G1) von Frachtfördereinrichtungen (100, 110, ..., 190), die dazu ausgebildet sind Frachtstücke (30) mit einer ersten Fördergeschwindigkeit (v1) zu fördern, und
- eine zweite Gruppe (G2) von Frachtfördereinrichtungen (200, 210, ..., 240), die dazu ausgebildet sind, Frachtstücke (30) mit einer zweiten Fördergeschwindigkeit (v2) zu fördern,
wobei sich die zweite Fördergeschwindigkeit (v2) deutlich, nämlich um einen Betrag von mindestens 20 % der ersten Fördergeschwindigkeit (v1), von der ersten Fördergeschwindigkeit (v1) unterscheidet,
**dadurch gekennzeichnet, dass**
die Frachtfördereinrichtungen (100, 110, ..., 240) ungeregelte Motoren umfassen, die dazu ausgelegt sind mit einer konstanten Drehzahl zu laufen, wobei die erste Gruppe (G1) von Frachtfördereinrichtungen (100, 110, ..., 190 in einem Be- und/oder Entladebereich des Frachtdecks (10) angeordnet ist und die zweite Gruppe (G2) in Förderbahnen (A, B) des Frachtdecks (10) angeordnet ist.

2. Frachtdeck nach Anspruch 1,
**dadurch gekennzeichnet, dass**
die Frachtfördereinrichtungen (100, 110, ... , 190) der ersten Gruppe (G1) jeweils ein Getriebe mit einem Übersetzungsverhältnis umfassen, das größer ist als das der Getriebe der Frachtfördereinrichtungen (200, 210, ..., 240) aus der zweiten Gruppe (G2).

3. Frachtdeck nach einem der vorhergehenden Ansprüche,
**dadurch gekennzeichnet, dass**
sich die zweite Fördergeschwindigkeit (v2) um einen Betrag von mindestens 50 % der ersten Fördergeschwindigkeit (v1) von der ersten Fördergeschwindigkeit (v1) unterscheidet.

4. Frachtladesystem mit einem Frachtdeck (10) nach einem der vorhergehenden Ansprüche und einer Steuereinrichtung (20), die mit den Frachtfördereinrichtungen (100, 110, ..., 240) zur Aktivierung und Deaktivierung der Frachtfördereinrichtungen (100, 110, ..., 240) in kommunikativer Verbindung steht, um ein erstes Frachtstück (30) zu ver- und/oder entladen, wobei das Frachtladesystem eine Positionsermittlungseinrichtung (22) zur Erfassung der Position mindestens eines zweiten Frachtstücks (30) aufweist, wobei die Steuereinrichtung (20) dazu ausgebildet ist, in Abhängigkeit von der bestimmten Position des mindestens einen zweiten Frachtstücks (30) eine Auswahl von Frachtfördereinrichtungen (100, 110, ..., 190) aus der zweiten Gruppe (G2) zu aktivieren, um das erste Frachtstück (30) neben dem zweiten Frachtstück (30) zu positionieren.

5. Frachtladesystem nach Anspruch 4,
**gekennzeichnet durch**
eine Abmessungserfassungseinrichtung zur zumindest teilweisen Erfassung der Abmessungen der Frachtstücke (30), wobei die Steuereinrichtung (20) dazu ausgebildet ist, in Abhängigkeit von den erfassten Abmessungen die Auswahl von Frachtfördereinrichtungen (100, 110, ..., 190) vorzunehmen, um Übermaße der Frachtstücke (30) beim Positionieren des ersten Frachtstücks (30) zu berücksichtigen.

6. Frachtladesystem nach Anspruch 4 oder 5,
**dadurch gekennzeichnet, dass**
die Abmessungserfassungseinrichtung ein Datenlesegerät (25, 25') zur Erfassung von den Frachtstücken (30) zugeordneten Daten, umfasst.

7. Frachtladesystem nach Anspruch 6,
**dadurch gekenntzeichnet,** dass
die Abmessungserfassungseinrichtung ein Datenlesegerät (25, 25') zur Erfassung von an den Frachtstücken (30) angeordneten RFID-Tags umfasst.

8. Verfahren zum Be- und/oder Entladen eines Frachtraums eines Flugzeugs, umfassend die Schritte:
- Ausrichten mindestens eines ersten Frachtstücks (30) mittels einer ersten Gruppe (G1) von Frachtfördereinrichtungen (100, 110, ..., 190), die das Frachtstück (30) mit einer ersten Fördergeschwindigkeit (v1) antreiben;
- Fördern des Frachtstücks (30) entlang einer Längsrichtung des Flugzeugs mittels einer zweiten Gruppe (G2) von Frachtfördereinrichtungen (200, 210, ..., 240), die das Frachtstück mit einer zweiten Fördergeschwindigkeit (v2) antreiben,
wobei sich die zweite Fördergeschwindigkeit (v2) deutlich, nämlich um einen Betrag von mindestens 20 % der ersten Fördergeschwindigkeit (v1), von der ersten Fördergeschwindigkeit (v1) unterscheidet, wobei die Frachtfördereinrichtungen (100, 110, ..., 240) ungeregelte Motoren umfassen, die dazu aufgelegt sind mit einer kanstanten Drehzahl zu laufen wobei die erste Gruppe (G1) von Frachtfördereinrichtungen (100, 110..... 190) in einem Be- und/oder Entladebereich des Frachtdecks angeordnet ist und die zweite Gruppe (G2) in Förderbahnen (A, B) des Frachtdecks (10) angeordnet ist.

9. Verfahren zum Beladen des Frachtraums nach Anspruch 8,
**gekennzeichnet durch**
- ein Bestimmen einer Position eines zweiten Frachtstücks (30) innerhalb des Frachtraums mittels einer Positionsermittlungseinrichtung (22);
- eine Auswahl und Aktivierung von Frachtfördereinrichtungen (200, 210,... , 240) aus der zweiten Gruppe (G2) in Abhängigkeit von der Position des zweiten Frachtstücks (30), um das erste Frachtstück (30) neben dem zweiten Frachtstück (30) zu positionieren.

10. Verfahren nach Anspruch 8 oder 9,
**gekennzeichnet durch**
ein Abbremsen des ersten Frachtstücks (30) in Abhängigkeit von der Position des zweiten Frachtstücks (30) und/oder einer Position des ersten Frachtstücks (30).

11. Verfahren nach Anspruch 10,
**gekennzeichnet durch**
ein Beschleunigen des ersten Frachtstück (30) nach dem Abbremsen anhand mindestens einer der Frachtfördereinrichtungen (200, 210, ..., 240) aus der zweiten Gruppe, um das erste Frachtstück (30) in eine vorgegebene Zielpositidn einzuparken.

12. Verfahren nach Anspruch 10 oder 11,
**gekennzeichnet durch**
ein Bestimmen einer Abmessung zumindest des ersten Frachtstücks (30), wobei das Abbremsen in Abhängigkeit von der bestimmten Abmessung erfolgt.

13. Verfahren nach Anspruch 12,
**dadurch gekennzeichnet, dass**
das Bestimmen der Abmessung zumindest des ersten Frachtstücks (30), ein Auslesen von Daten umfasst, die auf einem Speicher (34) am und/oder im Frachtstück (30), nämlich auf einem passiv Transponder, hinterlegt sind.

14. Verfahren bzw. Frachtdeck bzw. Frachtladesystem nach einem der vorhergehenden Ansprüche,
**dadurch gekennzeichnet, dass**
die Frachtfördereinrichtungen (200, 210, ... , 240) aus der zweiten Gruppe (G2) dazu ausgebildet sind, die Frachtstücke (30) mit der zweiten Fördergeschwindigkeit (v2), die größer als 15 Meter pro Minute, insbesondere größer als 25 Meter pro Minute, ist, anzutreiben.

15. Verfahren bzw. Frachtdeck bzw. Frachtladesystem nach einem der vorhergehenden Ansprüche,
**dadurch gekennzeichnet, dass**
die erste Frachtfördergeschwindigkeit (v1) kleiner ist als die zweite Frachtfördergeschwindigkeit (v2), nämlich kleiner als 25 Meter pro Minute.

## Claims

1. A freight deck, comprising:
- a first group (G1) of freight conveying means (100, 110, ..., 190) configured to convey cargo items (30) at a first conveying speed (v1), and
- a second group (G2) of freight conveying means (200, 210, ..., 240) configured to convey cargo items (30) at a second conveying speed (v2),
wherein the second conveying speed (v2) differs distinctly from the first conveying speed (v1), namely by an amount of at least 20% of the first conveying speed (v1),
**characterized in that**
the freight conveying means (100, 110, ..., 240) comprise unregulated motors configured to run at a constant rotational speed, wherein the first group (G1) of freight conveying means (100, 110, ..., 190) is arranged in a loading and/or unloading area of the freight deck (10), and the second group (G2) is arranged in conveyor tracks (A, B) of the freight deck (10).

2. The freight deck according to claim 1,
**characterized in that**
the freight conveying means (100, 110, ..., 190) of the first group (G1) each comprise a gear having a higher transmission ratio than that of the gears of the freight conveying means (200, 210, ..., 240) of the second group (G2).

3. The freight deck according to any one of the preceding claims,
**characterized in that**
the second conveying speed (v2) differs from the first conveying speed (v1) by an mount of at least 50% of the first conveying speed (v1).

4. A freight loading system including a freight deck (10) according to any one of the preceding claims and a control means (20) which is in communicative connection with the freight conveying means (100, 110, ..., 240) for activating or deactivating the freight conveying means (100, 110, ..., 240) in order to load and/or unload a first cargo item (30), wherein the freight loading system exhibits a position determining means (22) for detecting the position of at least one second cargo item (30), wherein the control means (20) is configured to activate a selection of freight conveying means (100, 110, ..., 190) from the second group (G2) depending on the determined position of the at least one second cargo item (30) so as to position the first cargo item (30) next to the second cargo item (30).

5. The freight loading system according to claim 4,
**characterized by**
a dimension detecting means for at least partially detecting the dimensions of the cargo items (30), wherein the control means (20) is configured to perform the selection of the freight conveying means (100, 110, ..., 190) depending on the detected dimensions so as to take into account oversizes of cargo items (30) when positioning the first cargo item (30).

6. The freight loading system according to claim 4 or 5,
**characterized in that**
the dimension detecting means comprises a data reading device (25, 25') for acquiring data associated with the cargo items (30).

7. The freight loading system according to claim 6,
**characterized in that**
the dimension detecting means comprises a data reading device (25, 25') for detecting RFID tags arranged on the cargo items (30).

8. A method for loading and/or unloading a cargo hold of an aircraft, comprising the steps of:
- aligning at least one first cargo item (30) by means of a first group (G1) of freight conveying means (100, 110, ..., 190) driving the cargo item (30) at a first conveying speed (v1);
- conveying the cargo item (30) along a longitudinal direction of the aircraft by means of a second group (G2) of freight conveying means (200, 210, ..., 240) driving the cargo item at a second conveying speed (v2), wherein the second conveying speed (v2) differs distinctly from the first conveying speed (v1), namely by an amount of at least 20% of the first conveying speed (v1), wherein the freight conveying means (100, 110, ..., 240) comprise unregulated motors configured to run at a constant rotational speed, wherein the first group (G1) of freight conveying means (100, 110, ..., 190) is arranged in a loading and/or unloading area of the freight deck, and the second group (G2) is arranged in conveyor tracks (A, B) of the freight deck (10).

9. The method for loading a cargo hold according to claim 8,
**characterized by**
- determining a position of a second cargo item (30) within the cargo hold by means of a position determining means (22);
- selecting and activating freight conveying means (200, 210, ..., 240) from the second group (G2) depending on the position of the second cargo item (30) so as to position the first cargo item (30) next to the second cargo item (30).

10. The method according to claim 8 or 9,
**characterized by**
decelerating the first cargo item (30) depending on the position of the second cargo item (30) and/or a position of the first cargo item (30).

11. The method according to claim 10,
**characterized by**
accelerating the first cargo item (30) after the decelerating by using at least one of the freight conveying means (200, 210, ..., 240) from the second group so as to park the first cargo item (30) in a prescribed target position.

12. The method according to claim 10 or 11,
**characterized by**
determining a dimension of at least the first cargo item (30), wherein the decelerating is performed depending on the determined dimension.

13. The method according to claim 12,
**characterized in that**
the determining of the dimension of at least the first cargo item (30) comprises reading out data stored on a memory (34) on and/or in the cargo item (30), namely on a passive transponder.

14. The method or freight deck or freight loading system according to any one of the preceding claims,
**characterized in that**
the freight conveying means (200, 210, ..., 240) from the second group (G2) are configured to drive the cargo items (30) at a second conveying speed (v2) which is higher than 15 meters per minute, optionally higher than 25 meters per minute.

15. The method or freight deck or freight loading system according to any one of the preceding claims,
**characterized in that**
the first freight conveying speed (v1) is lower than the second freight conveying speed (v2), namely lower than 25 meters per minute.

## Revendications

1. Soute de fret, incluant :
- un premier groupe (G1) de systèmes de convoyage de fret (100, 110, ..., 190) qui sont réalisés pour convoyer des pièces de fret (30) avec une première vitesse de convoyage (v1), et
- un second groupe (G2) de systèmes de convoyage de fret (200, 210,..., 240) qui sont réalisés pour convoyer des pièces de fret (30) avec une seconde vitesse de convoyage (v2),
dans laquelle la seconde vitesse de convoyage (v2) est nettement différente de la première vitesse de convoyage (v1), à savoir d'un montant d'au moins 20 % de la première vitesse de convoyage (v1), **caractérisée en ce que**
les systèmes de convoyage de fret (100, 110, ..., 240) incluent des moteurs non régulés qui sont conçus pour fonctionner avec une vitesse de rotation constante, dans laquelle le premier groupe (G1) de systèmes de convoyage de fret (100, 110, ..., 190) est agencé dans une première zone de chargement/déchargement de la soute de fret (10), et le second groupe (G2) est agencé dans des voies de convoyage (A, B) de la soute de fret (10).

2. Soute de fret selon la revendication 1,
**caractérisée en ce que** les systèmes de convoyage de fret (100, 110, ..., 190) du premier groupe (G1) incluent chacun un mécanisme avec un rapport de démultiplication qui est plus grand que celui du mécanisme des systèmes de convoyage de fret (200, 210, ..., 240) du second groupe (G2).

3. Soute de fret selon l'une des revendications précédentes,
**caractérisée en ce que** la seconde vitesse de convoyage (v2) diffère de la première vitesse de convoyage (v1) d'un montant d'au moins 50 % de la première vitesse de convoyage (v1).

4. Système de chargement de fret comprenant une soute de fret (10) selon l'une des revendications précédentes et un dispositif de commande (20) qui est en liaison de communication avec les systèmes de convoyage de fret (100, 110, ..., 240) pour activer et désactiver les systèmes de convoyage de fret (100, 110, ..., 240) afin de charger et/ou décharger une première pièce de fret (30), dans lequel le système de chargement de fret comprend un moyen de détermination de position (22) pour détecter la position d'au moins une seconde pièce de fret (30), dans lequel le dispositif de commande (20) est réalisé pour activer, en fonction de la position déterminée de ladite au moins une seconde pièce de fret (30), une sélection de systèmes de convoyage de fret (100, 110, ..., 190) du second groupe (G2), afin de positionner la première pièce de fret (30) à côté de la seconde pièce de fret (30).

5. Système de chargement de fret selon la revendication 4,
**caractérisé par** un dispositif de détection de dimension pour détecter au moins partiellement les dimensions des pièces de fret (30), dans lequel le dispositif de commande (20) est réalisé pour effectuer la sélection de systèmes de convoyage de fret (100, 110, ..., 190) en fonction des dimensions détectées, afin de tenir compte de sur-dimensions des pièces de fret (30) lors du positionnement de la première pièce de fret (30).

6. Système de chargement de fret selon la revendication 4 ou 5,
**caractérisé en ce que** le dispositif de détection de dimension inclut un appareil de lecture de données (25, 25') pour la détection de données associées aux pièces de fret (30).

7. Système de chargement de fret selon la revendication 6,
**caractérisé en ce que** le dispositif de détection de dimension inclut un appareil de lecture de données (25, 25') pour la détection d'étiquettes RFID agencées sur les pièces de fret (30).

8. Procédé pour charger et/ou décharger une soute de fret d'un avion, incluant les étapes consistant à :
- orienter au moins une pièce de fret (30) au moyen d'un premier groupe (G1) de systèmes de convoyage de fret (100, 110, ..., 190), qui entraîne la pièce de fret (30) avec une première vitesse de convoyage (v1) ;
- convoyer la pièce de fret (30) le long d'une direction longitudinale de l'avion au moyen d'un second groupe (G2) de systèmes de convoyage de fret (200, 210, ..., 240), qui entraîne la pièce de fret avec une seconde vitesse de convoyage (v2), de sorte que la seconde vitesse de convoyage (v2) est nettement différente de la première vitesse de convoyage (v1), à savoir d'un montant d'au moins 20 % de la première vitesse de convoyage (v1), dans lequel les systèmes de convoyage de fret (100, 110, ..., 240) incluent des moteurs non régulés, qui sont conçus pour fonctionner avec une vitesse de rotation constante,
de sorte que le premier groupe (G1) de systèmes de convoyage de fret (100, 110, ..., 190) est agencé dans une zone de chargement et/ou déchargement de la soute de fret, et le second groupe (G2) est agencé dans des voies de convoyage (A, B) de la soute de fret (10).

9. Procédé pour charger la soute de fret selon la revendication 8, **caractérisé par**
- une étape de détermination d'une position d'une seconde pièce de fret (30) à l'intérieur de la soute de fret au moyen d'un dispositif de détermination de position (22) ;
- une étape consistant à sélectionner et à activer des systèmes de convoyage de fret (200, 210, ..., 240) du second groupe (G2) en fonction de la position de la seconde pièce de fret (30), afin de positionner la première pièce de fret (30) à côté de la seconde pièce de fret (30).

10. Procédé selon la revendication 8 ou 9,
**caractérisé par** un freinage de la première pièce de fret (30) en fonction de la position de la seconde pièce de fret (30) et/ou d'une position de la première pièce de fret (30).

11. Procédé selon la revendication 10,
**caractérisé par** une accélération de la première pièce de fret (30) après le freinage au moyen d'au moins un des systèmes de convoyage de fret (200, 210, ..., 240) du second groupe, afin de ranger la première pièce de fret (30) dans une position cible prédéterminée.

12. Procédé selon la revendication 10 ou 11,
**caractérisé par** une détermination d'une dimension au moins de la première pièce de fret (30), de sorte que le freinage a lieu en fonction de la dimension déterminée.

13. Procédé selon la revendication 12,
**caractérisé en ce que** la détermination de la dimension au moins de la première pièce de fret (30) inclut une lecture de données mémorisées dans une mémoire (34) sur et/ou dans la pièce de fret (30), à savoir sur un transpondeur passif.

14. Procédé ou respectivement soute de fret ou système de chargement de fret selon l'une des revendications précédentes,
**caractérisé en ce que** les systèmes de convoyage de fret (200, 210, ..., 240) du second groupe (G2) sont réalisés pour entraîner les pièces de fret (30) avec la seconde vitesse de convoyage (v2), qui est supérieure à 15 m/mn, en particulier supérieure à 25 m/mn.

15. Procédé ou respectivement soute de fret ou système de chargement de fret selon l'une des revendications précédentes,
**caractérisé en ce que** la première vitesse de convoyage de fret (v1) est plus petite que la seconde vitesse de convoyage de fret (v2), à savoir plus petite que 25 m/mn.
